# EUROPÄISCHE PATENTSCHRIFT

(11) **EP 4 240 962 B1**
(45) Veröffentlichungstag und Bekanntmachung des Hinweises auf die Patenterteilung: **04.11.2026**
(21) Anmeldenummer: 21786369.5
(22) Anmeldetag: 29.09.2021
(51) Int. Cl.: F02P 13/00, B60K 6/42, B60W 20/00, F02B 19/10, F02P 15/02, F02D 37/02, F02D 41/24

(54) **VERFAHREN ZUM BETREIBEN EINES KRAFTFAHRZEUGS UND KRAFTFAHRZEUG**
METHOD FOR OPERATING A MOTOR VEHICLE, AND MOTOR VEHICLE
PROCÉDÉ DE FONCTIONNEMENT DE VÉHICULE AUTOMOBILE, ET VÉHICULE AUTOMOBILE

(30) Priorität: 05.11.2020 DE 102020129143
(43) Veröffentlichungstag der Anmeldung: 13.09.2023
(73) Patentinhaber: Bayerische Motoren Werke Aktiengesellschaft, 80809 München (DE)
(72) Erfinder: BAUMGARTNER, Laura, 85221 Dachau (DE); REICHMANN, Christoph, 85221 Dachau (DE)
(86) Internationale Anmeldenummer: PCT/EP2021/076720
(87) Internationale Veröffentlichungsnummer: WO 2022/096197

(56) Entgegenhaltungen:
- EP-A1- 3 561 255
- WO-A1-2019/125430
- DE-A1- 102020 110 960
- US-A1- 2013 085 633

## Beschreibung

Die Erfindung betrifft ein Verfahren zum Betreiben eines Kraftfahrzeugs, welches wenigstens zwei Motoren umfasst, von welchen zumindest ein erster Motor als Verbrennungskraftmaschine und zumindest ein zum Antreiben des Kraftfahrzeugs ausgebildeter zweiter Motor als Elektromotor ausgestaltet ist. Zum Ansteuern der wenigstens zwei Motoren wird zumindest eine Steuereinrichtung herangezogen. Ein weiterer Aspekt der Erfindung betrifft ein Kraftfahrzeug.

Zur Einhaltung von Grenzwerten, welche durch eine immer strenger werdende Abgasgesetzgebung sowohl für Schadstoffe als auch für Kohlendioxidemissionen festgelegt werden, haben sich Hybridfahrzeuge, mittels welchen ein zumindest lokal emissionsfreier Fahrbetrieb möglich ist, etabliert. So beschreibt beispielsweise die Offenlegungsschrift DE 10 2014 210 563 A1 ein Verfahren, bei welchem eine Kraftstoff verbrennende Kraftmaschine und ein als Elektromotor ausgebildeter Motor zum Antreiben des dortigen, als Hybrid-Elektrofahrzeug ausgestalteten Fahrzeugs zum Einsatz kommen.

Die DE 10 2020 110 960 A1 beschreibt eine Brennkraftmaschine mit einem Zylinderkopf und mit einer Vorkammer pro Zylinder, die über zumindest eine Überströmöffnung mit einem Brennraum strömungsverbunden ist. Eine erste Zündquelle mündet in die Vorkammer und eine zweite Zündquelle außerhalb der Vorkammer in den Brennraum ein. Eine Einspritzeinrichtung mündet seitlich in den Brennraum ein.

Aus der US 2013/085633 A1 ist eine Antriebssteuervorrichtung für ein Serienhybridfahrzeug bekannt, welche einen Motor, einen vom Motor angetriebenen Stromgeneratormotor, eine Batterie, die durch die vom Stromgeneratormotor erzeugte Energie geladen wird, und einen Antriebsmotor umfasst, der Antriebsräder durch die vom Stromgeneratormotor erzeugte Leistung oder die entladene Leistung von der Batterie antreibt.

Aufgabe der vorliegenden Erfindung ist es, ein Verfahren sowie ein Kraftfahrzeug der eingangs genannten Art zu schaffen, mittels welchen ein besonders energiesparender Fahrbetrieb ermöglicht ist.

Diese Aufgabe wird durch ein Verfahren mit den Merkmalen des Patentanspruchs 1 sowie durch ein Kraftfahrzeug mit den Merkmalen des Patentanspruchs 7 gelöst. Vorteilhafte Ausgestaltungen mit zweckmäßigen Weiterbildungen der Erfindung sind in den Unteransprüchen angegeben.

Ein erster Aspekt der Erfindung betrifft ein Verfahren zum Betreiben eines Kraftfahrzeugs, welches wenigstens zwei Motoren umfasst, von welchen zumindest ein erster Motor als Verbrennungskraftmaschine und zumindest ein zum Antreiben des Kraftfahrzeugs ausgebildeter zweiter Motor als Elektromotor ausgestaltet ist, bei welchem zumindest eine Steuereinrichtung zum Ansteuern der wenigstens zwei Motoren herangezogen wird. Der als Elektromotor ausgebildete zweite Motor kann also das Kraftfahrzeug elektrisch, also durch elektromotorischen Betrieb des zweiten Motors, antreiben und dadurch einen Fahrbetrieb des Kraftfahrzeugs ermöglichen.

Gemäß der Erfindung ist vorgesehen, dass der zumindest eine erste Motor wenigstens einen Brennraum, wenigstens eine Zündquelle und zumindest eine, einen mit dem wenigstens einen Brennraum fluidisch gekoppelten Vorkammerinnenraum aufweisende Vorkammer umfasst, in welche die wenigstens eine Zündquelle zumindest bereichsweise eingeführt ist, wobei der zumindest eine erste Motor durch Entflammung eines Kraftstoff-Luft-Gemisches in dem Vorkammerinnenraum mittels der zumindest einen Zündquelle in einem stabilen befeuerten Zustand und in einem instabilen befeuerten Zustand betreibbar ist, wobei der zumindest eine erste Motor durch die Steuereinrichtung, insbesondere ausschließlich dann, in Abhängigkeit von einer Lastanforderung aktiviert und nur dann durch Entflammung des Kraftstoff-Luft-Gemisches in dem Vorkammerinnenraum mittels der zumindest einen Zündquelle betrieben wird, wenn dadurch der erste Motor zur Erfüllung der Lastanforderung ausschließlich in dem stabilen befeuerten Zustand betrieben wird, wobei der erste Motor gezielt unbefeuert anhand des zweiten Motors aus dem Stillstand beschleunigt und geschleppt betrieben wird, bis der stabile befeuerte Zustand durch die Vorkammerzündung in einem von einem Niedriglastbereich verschiedenen Lastbereich möglich ist, wobei die Entflammung des Kraftstoff-Luft-Gemisches direkt im Lastbereich erfolgt. Dies ist von Vorteil, da der erste Motor dadurch gezielt, insbesondere ausschließlich, im stabilen befeuerten Zustand betrieben, also mit anderen Worten der Betrieb des ersten Motors im instabilen befeuerten Zustand vermieden werden kann. Anders ausgedrückt kann also der Betrieb des ersten Motors im instabilen befeuerten Zustand vollständig entfallen.

Unter dem Ausdruck, wonach der erste Motor zur Erfüllung der Lastanforderung ausschließlich in dem stabilen befeuerten Zustand betrieben wird, kann verstanden werden, dass Leistung anhand des ersten Motors bereitgestellt wird, insbesondere ausschließlich dann bereitgestellt wird, wenn der erste Motor zum Bereitstellen der Leistung, insbesondere ausschließlich, in dem stabilen befeuerten Zustand betrieben werden kann. Diese anhand des ersten Motors bereitgestellte Leistung, welche auch als erste Leistung bezeichnet werden kann, kann beispielsweise zum Antreiben von Fahrzeugkomponenten, beispielsweise Pumpen, oder zu deren Energieversorgung herangezogen werden, um nur einige Beispiele zu nennen.

Der erste Motor kann zusätzlich oder alternativ zum Antreiben des Kraftfahrzeugs ausgebildet sein. Der als Verbrennungskraftmaschine ausgebildete erste Motor kann also das Kraftfahrzeug verbrennungsmotorisch, also durch verbrennungsmotorischen Betrieb des ersten Motors, antreiben und dadurch den Fahrbetrieb des Kraftfahrzeugs ermöglichen. Denkbar ist auch, dass der erste Motor und der zweite Motor gleichzeitig betrieben werden, wodurch das Kraftfahrzeug gleichzeitig elektrisch als auch verbrennungsmotorisch angetrieben werden kann.

Der Vorkammerinnenraum und der Brennraum können dadurch miteinander fluidisch, also fluidleitend, gekoppelt sein, indem die Vorkammer wenigstens eine Durchgangsöffnung, bevorzugt eine Mehrzahl an Durchgangsöffnungen, aufweist, über welche der Vorkammerinnenraum und der Brennraum miteinander verbunden sein können.

Die Zündquelle kann vorzugsweise als Zündkerze ausgebildet sein. Die Zündkerze ist einerseits besonders robust und gestattet andererseits eine besonders zuverlässige Abgabe von Zündenergie in Form wenigstens eines Zündfunkens.

Der Erfindung liegt die Erkenntnis zugrunde, dass der Betrieb des ersten Motors (Verbrennungskraftmaschine) im stabilen befeuerten Zustand und im instabilen befeuerten Zustand jeweils insbesondere lastabhängig ist. Mit anderen Worten hängt es also von einer jeweiligen Last des ersten Motors ab, ob dieser im stabilen befeuerten Zustand oder im instabilen befeuerten Zustand betrieben werden kann. Darüber hinaus liegt der Erfindung die Erkenntnis zugrunde, dass beispielsweise unmittelbar nach erfolgtem Kaltstart, also vor Erreichen einer jeweiligen Betriebstemperatur jeweiliger Betriebsmedien, zu welchen beispielsweise Motoröl und Kühlwasser des ersten Motors zu zählen sind, die Gefahr, dass der erste Motor im instabilen befeuerten Zustand betrieben wird, besonders hoch ist. Je weiter jeweilige Temperaturen der jeweiligen Betriebsmedien unterhalb der jeweiligen Betriebstemperaturen liegen, desto stärker kühlen beispielsweise sogenannte Fackelstrahlen ab, welche - nach erfolgter Entflammung des Kraftstoff-Luft-Gemisches in dem Vorkammerinnenraum mittels der zumindest einen Zündquelle - aus dem Vorkammerinnenraum in den Brennraum übertreten. Durch die Abkühlung dieser Fackelstrahlen wird eine Entflammung von im Brennraum enthaltenem Kraftstoff (anhand der Fackelstrahlen) erschwert, sodass es sogar zu sogenannten Zündaussetzen kommen kann, welche den instabilen befeuerten Zustand charakterisieren können. Zu diesen Zündaussetzern kann es durch unerwünschtes Ausbleiben der Entflammung von Kraftstoff im Brennraum trotz Abgabe von Zündenergie an das Kraftstoff-Luft-Gemisch kommen.

Die Erfindung setzt hier an, da bei dem vorliegenden Verfahren durch die Steuereinrichtung eine Bewertung erfolgen kann, ob der erste Motor ausschließlich in dem stabilen befeuerten Zustand betrieben werden kann. Zur Bewertung können neben der Lastanforderung auch beispielsweise die Temperaturen der jeweiligen Betriebsmedien herangezogen werden. Liegen die Temperaturen der Betriebsmedien unterhalb der Betriebstemperatur, so besteht die Gefahr des Betriebs des ersten Motors im Kaltstart bedingten, instabilen befeuerten Zustand, sofern gleichzeitig die Lastanforderung zu gering ist, dass beispielsweise die Zündaussetzer auftreten. Sind die Betriebstemperaturen erreicht, so liegt der sogenannte betriebswarme Zustand des ersten Motors vor.

Im Gegensatz zum stabilen befeuerten Zustand kann es beim instabilen befeuerten Zustand allgemein zu einem unregelmäßigen Lauf, insbesondere einer erhöhten Laufunruhe beim verbrennungsmotorischen Betrieb des ersten Motors kommen.

Die Lastanforderung kann auf einem durch einen Fahrer des Kraftfahrzeugs basierenden Lastwunsch basieren. Der Lastwunsch kann durch Betätigen eines Gaspedals des Kraftfahrzeugs an die Steuereinrichtung übermittelt und der erste Motor basierend auf dem Lastwunsch angesteuert werden. Infolgedessen kann der erste Motor ein von dem Lastwunsch abhängiges Drehmoment erzeugen. Zusätzlich oder alternativ kann die Lastanforderung auch unabhängig von dem Lastwunsch des Fahrers vorgegeben werden, beispielsweise basierend auf einer Soll-Abgastemperatur, welche von dem ersten Motor emittiertes Abgas aufweisen soll um ein schnelles Aufheizen einer Abgasnachbehandlungsvorrichtung, beispielsweise eines Katalysators, des Kraftfahrzeugs bzw. des ersten Motors zu bewirken.

Im Leerlauf, sowohl bei betriebswarmem Zustand, als auch beim Kaltstart des ersten Motors, kann der instabile befeuerte Zustand beispielsweise bei einem Anteil an Zündaussetzern von mehr als 1 %, und damit gleichzeitig weniger als oder gleich 99 % erfolgreichen Zündungen (während des befeuerten Betriebs des ersten Motors durch Entflammung des Kraftstoff-Luft-Gemisches in dem Vorkammerinnenraum mittels der zumindest einen Zündquelle) vorliegen. Dementsprechend kann der stabile befeuerte Zustand (im Leerlauf sowohl im betriebswarmen Zustand, als auch beim Kaltstart) bei einem Anteil von weniger als 1% Zündaussetzern vorliegen.

Auch um das schnelle Aufheizen der Abgasnachbehandlungsvorrichtung, beispielsweise eines Katalysators des Kraftfahrzeugs, zu bewirken, kann die Lastanforderung erfolgen. Hierbei kann der instabile befeuerte Zustand bei einem Wert von mehr als 20% VAK bezogen auf einen indizierten Mitteldruck, welcher beim befeuerten Betrieb des ersten Motors im Brennraum auftritt, vorliegen, wohingegen der stabile befeuerte Zustand bei einem Wert von kleiner oder gleich 20 % VAK vorliegen kann. Die Abkürzung VAK steht dabei für einen Variationskoeffizienten, welcher auf den indizierten Mitteldruck bezogen ist.

Allgemein kann der instabile befeuerte Zustand vorliegen, wenn mindestens ein Zündaussetzer von 500 aufeinanderfolgenden Arbeitsspielen, bevorzugt mindestens ein Zündaussetzer von 1000 aufeinanderfolgenden Arbeitsspielen, also bei einem Hochdruckanteil des indizierten Mitteldrucks (p_{mi,HD}) auftritt, wohingegen der stabile befeuerte Zustand bei einem entsprechend geringeren Anteil an Zündaussetzern unter den aufeinanderfolgenden Arbeitsspielen auftreten kann.

In einer vorteilhaften Weiterbildung der Erfindung wird ein zum Bereitstellen von elektrischer Energie für den zweiten Motor ausgebildeter elektrischer Energiespeicher, insbesondere eine Hochvoltbatterie, des Kraftfahrzeugs zumindest dann mit beim Betrieb des ersten Motors zumindest im stabilen befeuerten Zustand erzeugter Energie versorgt, wenn ein vorbestimmter Ladezustand des elektrischen Energiespeichers unterschritten wird. Dies ist von Vorteil, da somit der erste Motor bei dessen Betrieb im stabilen befeuerten Zustand herangezogen werden kann, um den Energiespeicher zu laden, wodurch eine Reichweitenerhöhung für das Antreiben des Kraftfahrzeugs anhand des zweiten Motors bewirkt werden kann.

Durch eine Kurbelwelle des ersten Motors kann die Energie im stabilen befeuerten Zustand bereitgestellt werden. Die Kurbelwelle kann beispielsweise einen mit dem Energiespeicher gekoppelten Generator des Kraftfahrzeugs antreiben, wodurch der Energiespeicher geladen, also mit durch den Generator bereitgestellter elektrische Energie versorgt werden kann. Somit kann die durch den ersten Motor bereitgestellte Leistung zumindest teilweise genutzt werden, um den Energiespeicher zu laden. Denkbar ist auch, dass der zweite Motor als Generator betrieben und dementsprechend der Energiespeicher anhand des zweiten Motors geladen wird. Der zweite Motor kann also mit anderen Worten als sogenannter Motorgenerator, also als elektrische Maschine, die wechselweise entweder als elektrischer Antrieb oder als elektrischer Generator verwendet werden kann, betrieben werden.

Bei dem Energiespeicher kann es sich beispielsweise um eine Traktionsbatterie, auch Hochvoltbatterie genannt, des Kraftfahrzeugs handeln.

In einer weiteren vorteilhaften Weiterbildung der Erfindung wird der zumindest eine erste Motor zumindest dann durch Entflammung von Kraftstoff mittels einer unmittelbar in den Brennraum ragenden, zweiten Zündquelle des ersten Motors betrieben und das Kraftfahrzeug mittels des ersten Motors angetrieben, wenn das Antreiben des Kraftfahrzeugs durch den zweiten Motor ausgeschlossen ist und die Lastanforderung den Betrieb des zumindest einen ersten Motors durch Entflammung des Kraftstoff-Luft-Gemisches in dem Vorkammerinnenraum mittels der zumindest einen Zündquelle im instabilen befeuerten Zustand erwarten lässt. Dies ist von Vorteil, da die zweite Zündquelle somit genutzt werden kann, um den ersten Motor durch Entflammung von Kraftstoff befeuert zu betreiben, wenn die beispielsweise zu geringe Lastanforderung dazu führen würde, dass der erste Motor durch Entflammung des Kraftstoff-Luft-Gemisches in dem Vorkammerinnenraum anhand der Zündquelle zum instabilen befeuerten Zustand führen würde. Die Zündquelle und die zweite Zündquelle können also jeweils für unterschiedliche Werte der Lastanforderung, also mit anderen Worten unterschiedliche Lastwerte, zur Entflammung genutzt werden, sodass der erste Motor in dessen gesamtem Lastkennfeld, insbesondere ohne Zündaussetzer, befeuert betrieben werden kann.

Auch um das schnelle Aufheizen der Abgasnachbehandlungsvorrichtung zu bewirken, kann die Entflammung von Kraftstoff mittels der zweiten Zündquelle erfolgen. Die Steuereinrichtung, welche allgemein als sogenanntes Steuergerät, insbesondere Motorsteuergerät, ausgebildet sein kann, kann zum schnellen Aufheizen besonders späte Verbrennungsschwerpunktlagen von beispielsweise 70 - 80 Grad Kurbelwinkel (°KW) nach einem oberen Zündtotpunkt, welcher auch als Zünd-OT abgekürzt werden kann, einstellen.

Das Antreiben des Kraftfahrzeugs durch den zweiten Motor kann beispielsweise dann ausgeschlossen sein, wenn keine ausreichende Menge an elektrischer Energie zum Antreiben des zweiten Motors zur Verfügung steht. Dies kann beispielsweise bei einem kritischen Energiespeicher-Ladezustand, bei welchem das Antreiben des Kraftfahrzeugs mittels des zweiten Motors ausgeschlossen sein kann, der Fall sein.

In einer weiteren vorteilhaften Weiterbildung der Erfindung wird die Vorkammer zumindest in einem Volllastbetrieb des zumindest einen ersten Motors als passive Vorkammer betrieben. Dies ist von Vorteil, da sich durch den Betrieb mit der passiven Vorkammer eine besonders hohe Klopffestigkeit des ersten Motors, und damit ein zuverlässiges Vermeiden von klopfender Zündung, sicherstellen lässt.

Das Kraftstoff-Luft-Gemisch kann bei Betrieb der Vorkammer als passive Vorkammer aus dem wenigstens einem Brennraum in den fluidisch (Fluid leitend; Fluid austauschend) mit dem Brennraum gekoppelten Vorkammerinnenraum eintreten und dort anhand der Zündquelle gezündet werden. Die Vorkammer und die Zündquelle können bei der Ausgestaltung der Vorkammer als passive Vorkammer besonders kompakt, vorzugsweise an einem Zylinderkopf des ersten Motors, angeordnet sein.

Der zumindest eine erste Motor kann eine Einspritzvorrichtung umfassen, mittels welcher Kraftstoff direkt, also durch Direkteinspritzung in den Brennraum, und/oder indirekt in den Brennraum eingebracht werden kann. Indirekt kann der Kraftstoff in den Brennraum beispielsweise durch Einleiten des Kraftstoffes in einen Ansaugtrakt des ersten Motors eingebracht werden. Aus dem Ansaugtrakt kann der Kraftstoff dann - über geöffnete Einlassventile - in den Brennraum eingeleitet werden.

In einer weiteren vorteilhaften Weiterbildung der Erfindung wird die Vorkammer zumindest in einem Teillastbetrieb des zumindest einen ersten Motors als aktive Vorkammer betrieben. Dies kann in vorteilhafter Weise eine zuverlässige Entflammung auch bei magerem globalen Verbrennungsluftverhältnis (λ>1) bewirken, wodurch ein besonders Kraftstoff sparender Betrieb des ersten Motors ermöglicht ist. Zum Betrieb der Vorkammer als aktive Vorkammer kann der zumindest eine erste Motor eine Vorkammer-Einspritzvorrichtung umfassen, mittels welcher Kraftstoff und zusätzlich oder alternativ Luft, beispielsweise ein Luft-KraftstoffGemisch, direkt in den Vorkammerinnenraum eingebracht werden kann. Dadurch kann eine besonders zuverlässige Entflammung des dadurch innerhalb des Vorkammerinnenraums gebildeten Kraftstoff-Luft-Gemisches erzielt werden.

In einer weiteren vorteilhaften Weiterbildung der Erfindung ist der instabile befeuerte Zustand einem Niedriglastbereich zwischen 0 % und maximal 10 % einer Maximallast des zumindest einen ersten Motors zugeordnet. Mit anderen Worten erstreckt sich der Niedriglastbetrieb Bereich bevorzugt zwischen 0 % und maximal 10 % der Maximallast des ersten Motors. Dementsprechend wird bevorzugt in diesem Niedriglastbereich auf den instabilen befeuerten Zustand verzichtet. Der erste Motor würde also, sofern er in dem Niedriglastbereich durch Entflammung des Kraftstoff-Luft-Gemisches in dem Vorkammerinnenraum mittels der Zündquelle betrieben würde, im instabilen befeuerten Zustand laufen. Dementsprechend wird der erste Motor durch Entflammung des Kraftstoff-Luft-Gemisches in dem Vorkammerinnenraum mittels der zumindest einen Zündquelle bevorzugt in einem, von dem Niedriglastbereich verschiedenen Lastbereich, insbesondere Kennfeldbereich, betrieben. Beim Betrieb unter Maximallast kann der erste Motor ein sogenanntes Nennmoment, also ein maximal durch den ersten Motor an dessen Kurbelwelle erzeugbares Drehmoment, abgeben.

Der Niedriglastbereich kann bei einem indizierten Mitteldruck (pₘᵢ) von kleiner 2 bar, also beispielsweise pₘᵢ= 1,95 bar und weniger, vorliegen. Werte des indizierten Mitteldrucks von größer oder gleich 2 bar, beispielsweise 2,05 bar, können dem von dem Niedriglastbereich verschiedenen Lastbereich zugeordnet sein. Im betriebswarmen Zustand kann der instabile befeuerte Zustand im Niedriglastbereich bei einem Wert von größer oder gleich 4 % VAK (bezogen auf den indizierten Mitteldruck) vorliegen, wohingegen der stabile befeuerte Zustand bei einem Wert von weniger als 4 % VAK vorliegen kann. Beim Kaltstart kann der instabile befeuerte Zustand im Niedriglastbereich beispielsweise bei einem Anteil an Zündaussetzern von mehr als 1 %, und damit gleichzeitig weniger als oder gleich 99 % erfolgreichen Zündungen (während des befeuerten Betriebs des ersten Motors durch Entflammung des Kraftstoff-Luft-Gemisches in dem Vorkammerinnenraum mittels der zumindest einen Zündquelle) vorliegen.

Ein zweiter Aspekt der Erfindung betrifft ein Kraftfahrzeug mit wenigstens zwei Motoren, von welchen zumindest ein erster Motor als Verbrennungskraftmaschine und zumindest ein zum Antreiben des Kraftfahrzeugs ausgebildeter zweiter Motor als Elektromotor ausgestaltet ist, und mit zumindest einer Steuereinrichtung, welche zum Ansteuern der wenigstens zwei Motoren eingerichtet ist. Gemäß der Erfindung ist vorgesehen, dass der zumindest eine erste Motor wenigstens einen Brennraum, wenigstens eine Zündquelle und zumindest eine, einen mit dem wenigstens einen Brennraum fluidisch gekoppelten Vorkammerinnenraum aufweisende Vorkammer umfasst, in welche die wenigstens eine Zündquelle zumindest bereichsweise eingeführt ist, wobei der zumindest eine erste Motor durch Entflammung eines Kraftstoff-Luft-Gemisches in dem Vorkammerinnenraum mittels der zumindest einen Zündquelle in einem stabilen befeuerten Zustand und in einem instabilen befeuerten Zustand betreibbar ist, und wobei die Steuereinrichtung dazu eingerichtet ist, den zumindest einen ersten Motor in Abhängigkeit von einer Lastanforderung zu aktivieren und derart anzusteuern, dass der zumindest eine erste Motor nur dann durch Entflammung des Kraftstoff-Luft-Gemisches in dem Vorkammerinnenraum mittels der zumindest einen Zündquelle betrieben wird, wenn der erster Motor zur Erfüllung der Lastanforderung ausschließlich in dem stabilen befeuerten Zustand betreibbar ist, wobei der erste Motor gezielt unbefeuert anhand des zweiten Motors aus dem Stillstand beschleunigt und geschleppt betrieben wird, bis der stabile befeuerte Zustand durch die Vorkammerzündung in einem von einem Niedriglastbereich verschiedenen Lastbereich möglich ist, wobei die Entflammung des Kraftstoff-Luft-Gemisches direkt im Lastbereich erfolgt. Bei diesem Kraftfahrzeug ist ein besonders energiesparender Fahrbetrieb, also ein Betrieb, bei welchem das Kraftfahrzeug gefahren und dabei motorisch angetrieben wird, möglich.

In einer vorteilhaften Weiterbildung der Erfindung umfasst das Kraftfahrzeug einen seriellen Hybridantriebsstrang, welchem die wenigstens zwei Motoren zugeordnet sind. Dies ist von Vorteil, da der erste Motor dabei ausschließlich dazu eingesetzt werden kann, Leistung für den Betrieb des zweiten Motors bereitzustellen. Dadurch kann der erste Motor besonders flexibel eingesetzt werden, sodass der Betrieb des ersten Motors im stabilen befeuerten Zustand besonders einfach sichergestellt werden kann.

In einer vorteilhaften Weiterbildung der Erfindung umfasst das Kraftfahrzeug einen parallelen Hybridantriebsstrang, welchem die wenigstens zwei Motoren zugeordnet sind. Dies ist von Vorteil, da hierdurch sowohl der erste Motor, als auch der zweite Motor zum Antreiben des Kraftfahrzeugs genutzt werden können, wodurch bei Bedarf eine besonders starke Beschleunigung des Kraftfahrzeugs ermöglicht ist.

In einer vorteilhaften Weiterbildung der Erfindung umfasst das Kraftfahrzeug einen leistungsverzweigten Hybridantriebsstrang, welchem die wenigstens zwei Motoren zugeordnet sind. Dies gestattet in vorteilhafter Weise eine besonders flexible Einstellung verschiedener Fahrzustände des Kraftfahrzeugs.

Die in Bezug auf einen der Aspekte vorgestellten, bevorzugten Ausführungsformen und deren Vorteile gelten entsprechend für den anderen Aspekt der Erfindung und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:

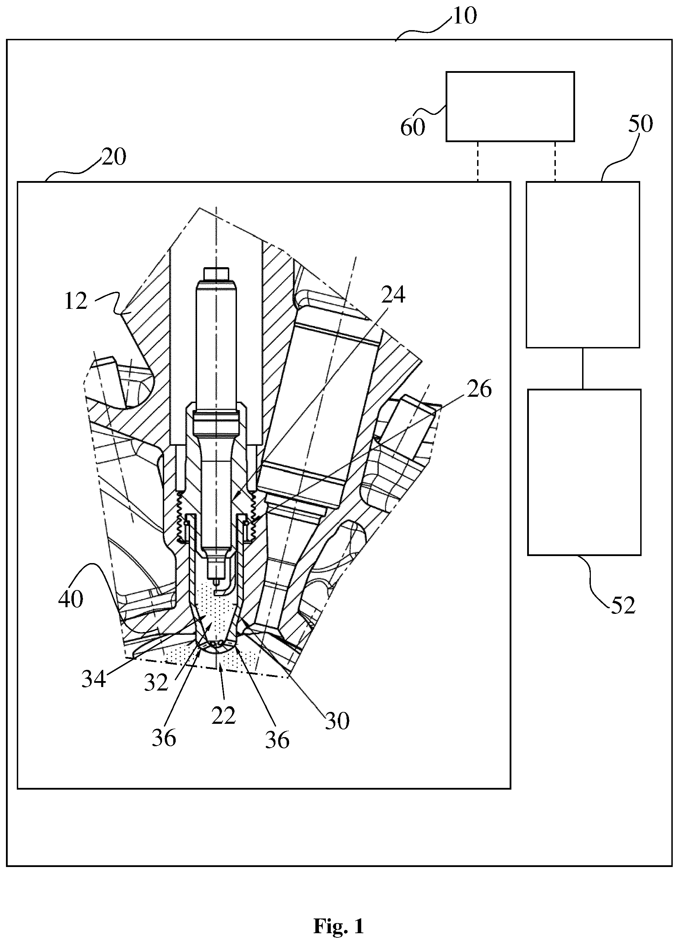

- Fig. 1: eine abstrahierte Darstellung eines Kraftfahrzeugs, welches zwei ebenfalls abstrahiert dargestellte Motoren zum Antreiben des Kraftfahrzeugs umfasst, wobei ein bereichsweise in schematischer Schnittdarstellung gezeigter erster Motor der zwei Motoren als Verbrennungskraftmaschine und ein zweiter Motor der Motoren als Elektromotor ausgebildet ist, und der erste Motor wenigstens einen Brennraum, wenigstens eine Zündquelle und zumindest eine, einen mit dem wenigstens einen Brennraum fluidisch gekoppelten Vorkammerinnenraum aufweisende Vorkammer umfasst, in welche die wenigstens eine Zündquelle zumindest bereichsweise eingeführt ist, um in dem Vorkammerinnenraum ein Kraftstoff-Luft-Gemisch zu entflammen; und

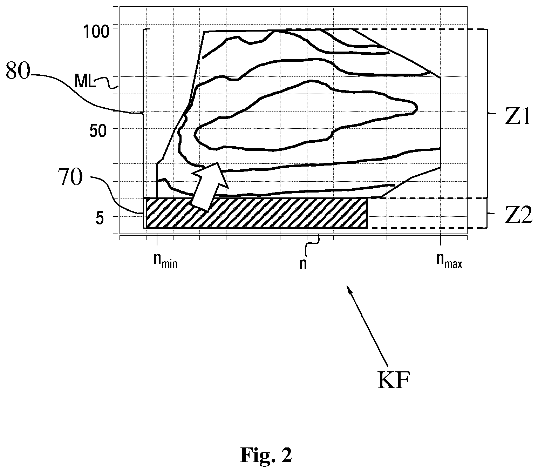

- Fig. 2: eine qualitative Darstellung eines Kennfeldes, welches auch als Lastkennfeld bezeichnet werden kann, welches einen Niedriglastbereich zeigt, in welchem der erste Motor bei Entflammung des Kraftstoff-Luft-Gemisches in dem Vorkammerinnenraum mittels der zumindest einen Zündquelle in einem instabilen befeuerten Zustand betreibbar ist, und welches einen von dem Niedriglastbereich verschiedenen Lastbereich zeigt, in welchem der erste Motor bei Entflammung des Kraftstoff-Luft-Gemisches in dem Vorkammerinnenraum mittels der zumindest einen Zündquelle in einem stabilen befeuerten Zustand betreibbar ist.

Fig. 1 zeigt in einer schematischen Darstellung ein Kraftfahrzeug 10, welches zwei Motoren 20, 50 umfasst. Ein erster Motor 20 dieser beiden Motoren 20, 50 ist vorliegend als Verbrennungskraftmaschine ausgebildet. Ein zweiter Motor 50 der beiden Motoren 20, 50 ist vorliegend als Elektromotor ausgestaltet. Vorliegend kann das Kraftfahrzeug 10 mit jedem der Motoren 20, 50 angetrieben werden. Mit anderen Worten können die Motoren 20, 50 jeweils Antriebsleistung, insbesondere unabhängig voneinander, generieren und anhand dieser Antriebsleistung jeweilige, hier nicht weiter gezeigte Antriebsräder des Kraftfahrzeugs 10 antreiben. Dadurch kann das Kraftfahrzeug 10 beispielsweise ausschließlich verbrennungsmotorisch und/oder ausschließlich elektromotorisch angetrieben und damit bewegt werden.

Es ist klar, dass das Kraftfahrzeug 10 auch beispielsweise mehrere zweite Motoren 50 umfassen kann, mittels welchen das Kraftfahrzeug 10 angetrieben werden kann. Denkbar ist beispielsweise, dass verschiedenen Rädern einer Achse des Kraftfahrzeugs 10 jeweils ein zweiter Motor 50, welcher beispielsweise als Radnabenmotor ausgestaltet sein kann, zugeordnet ist, um nur ein Beispiel zu nennen.

Anhand einer Steuereinrichtung 60 des Kraftfahrzeugs 10, welche signalübertragend mit jedem der Motoren 20, 50 gekoppelt ist, können die Motoren 20, 50 angesteuert, also mit anderen Worten geregelt und gesteuert betrieben werden. Der zumindest eine zweite Motor 50 kann beispielsweise als Motorgenerator ausgestaltet sein. Unabhängig davon können die Motoren 20, 50 mechanisch miteinander gekoppelt sein, oder durch eine vorliegend nicht weiter gezeigte Kupplungseinrichtung des Kraftfahrzeugs 10 mechanisch miteinander koppelbar sein. Das Kraftfahrzeug 10 umfasst einen Energiespeicher 52, welcher beispielsweise als Hochvoltbatterie, auch Traktionsbatterie genannt, ausgebildet sein kann. Über den Energiespeicher 20 ist der zumindest eine zweite Motor 50 mit elektrischer Energie versorgbar.

Das Kraftfahrzeug 10 kann beispielsweise einen seriellen Hybridantriebsstrang oder einen parallelen Hybridantriebsstrang umfassen, welchem die Motoren 20, 50 zugeordnet sein können. Alternativ dazu kann das Kraftfahrzeug 10 einen leistungsverzweigten Hybridantriebsstrang umfassen, welchem die Motoren 20, 50 zugeordnet sein können. Zusammenfassend sind also verschiedene Betriebsstrategien der Motoren 20, 50 denkbar.

Fig. 1 zeigt zudem in schematischer Schnittdarstellung einen Ausschnitt des als Verbrennungskraftmaschine ausgebildeten ersten Motors 20. Anhand dieses Ausschnitts ist ein Teilbereich eines Zylinderkopfes 12 des ersten Motors 20 erkennbar. An dem Zylinderkopf 12 ist eine Zündquelle 24, welche vorliegend als Zündkerze ausgestaltet ist, angeordnet. Ein Ende der Zündquelle 24 ist in einen Vorkammerinnenraum 32 einer Vorkammer 30 des ersten Motors 20 eingeführt. An diesem Ende kann Zündenergie, beispielsweise in Form eines Zündfunkens freigesetzt werden, um ein in dem Vorkammerinnenraum 32 befindliches Kraftstoff-Luft-Gemisch 34 zu zünden und dadurch zu entflammen. Die Zündquelle 24 und die Vorkammer 30 sind vorliegend über ein Fixierungselement 26, welches beispielsweise als Sicherungsring ausgestaltet sein kann, miteinander verbunden. Ebenfalls anhand von Fig. 1 ist erkennbar, dass die Vorkammer 30 mehrere Durchgangsöffnungen 36 umfasst, über welche der Vorkammerinnenraum 32 fluidisch, insbesondere gasleitend, mit einem Brennraum 22 des ersten Motors 20 verbunden ist.

Der erste Motor 20 kann durch Entflammung des Kraftstoff-Luft-Gemisches 34 in dem Vorkammerinnenraum 32 mittels der zumindest einen Zündquelle 24 in einem stabilen befeuerten Zustand Z1 und in einem instabilen befeuerten Zustand Z2 betrieben werden. Der stabile befeuerte Zustand Z1 und der instabile befeuerte Zustand Z2 sind unterschiedlichen Lastbereichen 70, 80, nämlich einem Niedriglastbereich 70 und einem von dem Niedriglastbereich 70 verschiedenen Lastbereich 80, welche jeweils schematisch in einem in Fig. 2 gezeigten Kennfeld KF aufgetragen sind, zugeordnet. Dabei ist der stabile befeuerte Zustand Z1 dem Lastbereich 80 und der instabile befeuerte Zustand Z2 dem Niedriglastbereich 70 zugeordnet. Auf einer Ordinate des Kennfeldes KF ist vorliegend eine Motorlast ML in Prozent (%) einer Volllast des ersten Motors 20 aufgetragen, wohingegen auf einer Abszisse des Kennfeldes KF eine Drehzahl n mit der Einheit "Umdrehungen pro Minute" aufgetragen ist. Die Volllast kann auch als Maximallast bezeichnet werden. Die Volllast des ersten Motors 20 entspricht dabei einem Wert von 100 %. Darüber hinaus ist qualitativ auf der Abszisse eine Minimaldrehzahl nₘᵢₙ, welche auch als Leerlaufdrehzahl des ersten Motors 20 bezeichnet werden kann sowie eine Maximaldrehzahl nₘₐₓ des ersten Motors 20 aufgetragen.

Der erste Motor 20 wird durch die Steuereinrichtung 60 in Abhängigkeit von einer Lastanforderung nur dann aktiviert und nur dann durch Entflammung des Kraftstoff-Luft-Gemisches 34 in dem Vorkammerinnenraum 32 mittels der Zündquelle 24 betrieben, wenn dadurch der erste Motor 20 zur Erfüllung der Lastanforderung ausschließlich in dem stabilen befeuerten Zustand Z1 betrieben werden kann.

Der Betrieb des ersten Motors 20 im stabilen befeuerten Zustand Z1 kann erfolgen, indem das Kraftstoff-Luft-Gemisch 34 in dem Vorkammerinnenraum 32 mittels der Zündquelle 34 entflammt wird und infolge der Entflammung Fackelstrahlen über die Durchgangsöffnungen 36 in den Brennraum 22 eintreten. Die Fackelstrahlen (nicht gezeigt) können dann in dem Brennraum 22 enthaltenen Kraftstoff entflammen und damit zünden, wodurch ein vorliegend nicht weiter gezeigter, den Brennraum 22 zumindest bereichsweise begrenzender Kolben des ersten Motors 20 bewegt und dadurch eine ebenfalls nicht weiter gezeigte, mit dem Kolben gekoppelte Kurbelwelle des ersten Motors 20 angetrieben werden kann.

Der zum Bereitstellen von elektrischer Energie für den zweiten Motor 50 ausgebildete elektrische Energiespeicher 52 (hier: Hochvoltbatterie, Traktionsbatterie) des Kraftfahrzeugs 10 wird zumindest dann mit beim Betrieb des ersten Motors 20 im stabilen befeuerten Zustand Z1 erzeugter Energie versorgt, wenn ein vorbestimmter Ladezustand des elektrischen Energiespeichers 52 unterschritten wird. Der Ladezustand des elektrischen Energiespeichers 52 kann auch als SOC abgekürzt und als "State Of Charge" bezeichnet werden.

Der erste Motor 20 kann zumindest dann durch Entflammung des Kraftstoffs mittels einer unmittelbar in den Brennraum 22 ragenden, zweiten Zündquelle 40 des ersten Motors 20 betrieben und das Kraftfahrzeug 10 mittels des ersten Motors 20 angetrieben werden, wenn das Antreiben des Kraftfahrzeugs 10 durch den zweiten Motor 50 ausgeschlossen ist und die Lastanforderung den Betrieb des ersten Motors 20 durch Entflammung des Kraftstoff-Luft-Gemisches 34 in dem Vorkammerinnenraum 32 mittels der Zündquelle 24 im instabilen befeuerten Zustand Z2 erwarten lässt. Die zweite Zündquelle 40 ist vorliegend ebenfalls als Zündkerze ausgebildet. Mit anderen Worten wird also beim Betrieb des ersten Motors 20 im Niedriglastbereich 70 auf die Entflammung des Kraftstoff-Luft-Gemisches 34 anhand der Zündquelle 24 und damit innerhalb des Vorkammerinnenraums 32 verzichtet, um zu vermeiden, dass der erste Motor 20 dadurch im instabilen befeuerten Zustand Z2 läuft. Stattdessen kann der erste Motor 20 im Niedriglastbereich 70 durch Entflammung des Kraftstoffes unmittelbar im Brennraum 22 anhand der zweiten Zündquelle 40 betrieben werden. Die zweite Zündquelle 40 ist in Fig. 1 aus Gründen der Übersichtlichkeit stark abstrahiert und dabei durch eine gestrichelte Linie dargestellt.

Die Vorkammer 30 kann zumindest beim Betrieb des ersten Motors 20 unter Volllast, also mit anderen Worten im Volllastbetrieb des ersten Motors 20 als passive Vorkammer betrieben werden. In einem Teillastbetrieb des ersten Motors 20 kann die Vorkammer 30 auch als aktive Vorkammer betrieben werden. Der Teillastbetrieb ist dabei einem Teillastbereich zugeordnet, welcher sich zwischen dem in Fig. 2 verdeutlichten Niedriglastbereich 70 und der Volllast erstreckt. Der Teillastbereich kann dabei also einem Teil des Lastbereichs 80 ausschließlich der Volllast entsprechen. Anhand von Fig. 2 ist erkennbar, dass sich der instabile befeuerte Zustand Z2 über den Niedriglastbereich 70, welcher vorliegend exemplarisch zwischen ausschließlich 0 % und maximal 10 % der Maximallast (100 % der Motorlast ML) liegen kann, erstreckt.

Das vorliegende Verfahren ermöglicht es, den ersten Motor 20 (Verbrennungskraftmaschine) ausschließlich im stabilen befeuerten Zustand Z1 durch eine sogenannte Vorkammerzündung, also durch die Entflammung des Kraftstoff-Luft-Gemisches 34 in dem Vorkammerinnenraum 32 mittels der Zündquelle 24 zu betreiben, wobei anhand der dadurch gebildeten und über die Durchgangsöffnungen 36 in den Brennraum 22 übertretenden Fackelstrahlen der Kraftstoff im Brennraum 22 entflammt und infolgedessen der Kolben bewegt und die Kurbelwelle angetrieben wird.

Dem Verfahren liegt die Erkenntnis zugrunde, dass die stabile Entflammung und Verbrennung durch die Vorkammerzündung bei sehr niedrigen Lasten des ersten Motors 20, also mit anderen Worten beim Betrieb des ersten Motors 20 im Niedriglastbereich 70, also beispielsweise im Leerlauf, und/oder bei sehr späten Zündwinkeln im Niedriglastbereich 70 nicht zuverlässig und reproduzierbar gewährleistet werden kann. Weiterhin liegt die Erkenntnis zugrunde, dass die Vorkammerzündung bei hohen Lasten, also beim Betrieb der Verbrennungskraftmaschine (erster Motor 20) im Lastbereich 80 und auch unter Volllast deutliche Vorteile gegenüber vorkammerlosen Verbrennungsmotoren insbesondere im Verbrennungsablauf bietet.

Das Verfahren setzt hier an und ermöglicht den gezielten Betrieb des ersten Motors 20 mit der Vorkammerzündung im hybridisierten Fahrzeugantrieb, also mit seriellem, parallelem oder leistungsverzweigten Hybridantriebsstrang. Der Betrieb des ersten Motors 20 im Niedriglastbereich 70 unter Vorkammerzündung im instabilen befeuerten Zustand Z2 kann gezielt unterbunden, also mit anderen Worten ausgeblendet werden. Beispielsweise kann der Betrieb des ersten Motors 20 im Niedriglastbereich 70 vollständig entfallen, wenn der Ladezustand des elektrischen Energiespeichers 52 ausreicht, um das Kraftfahrzeug 10 ausschließlich anhand des (zumindest einen) zweiten Motors 50 und damit rein elektromotorischen zu betreiben. Wird der vorbestimmter Ladezustand unterschritten, was beispielsweise bei entladenem (leerem) elektrischen Energiespeicher 52 der Fall ist, so kann der erste Motor 20 beispielsweise gezielt unbefeuert anhand des zweiten Motors 50 oder anhand eines Anlassers des Kraftfahrzeugs 10 beschleunigt und direkt oberhalb des Niedriglastbereich 70 durch die Vorkammerzündung befeuert betrieben werden. Der erste Motor 20 kann also sozusagen aus dem Stillstand beschleunigt und geschleppt betrieben werden, bis der stabile befeuerte Zustand Z1 durch die Vorkammerzündung im Lastbereich 80 möglich ist. Die Entflammung des Kraftstoff-Luft-Gemisches 34 kann dann direkt, insbesondere ausschließlich, im Lastbereich 80 erfolgen. Dementsprechend ist eine Betriebspunktanhebung des ersten Motors 20 in einem Betriebsbereich außerhalb des Niedriglastbereichs 70 und damit der Betrieb des ersten Motors 20 im stabilen befeuerten Zustand Z1 möglich, um beispielsweise den Energiespeicher 52 mittels des ersten Motors 20 zu laden und zusätzlich oder alternativ das Kraftfahrzeug 10 mittels des ersten Motors 20 anzutreiben.

### Bezugszeichenliste

- 10: Kraftfahrzeug
- 12: Zylinderkopf
- 20: erster Motor
- 22: Brennraum
- 24: Zündquelle
- 26: Fixierungselement
- 30: Vorkammer
- 32: Vorkammerinnenraum
- 34: Kraftstoff-Luft-Gemisch
- 36: Durchgangsöffnung
- 40: zweite Zündquelle
- 50: zweiter Motor
- 52: Energiespeicher
- 60: Steuereinrichtung
- 70: Niedriglastbereich
- 80: Lastbereich
- KF: Kennfeld
- ML: Motorlast
- n: Drehzahl
- nₘᵢₙ: Minimaldrehzahl
- nₘₐₓ: Maximaldrehzahl
- Z1: stabiler befeuerter Zustand
- Z2: instabiler befeuerter Zustand

## Patentansprüche

1. Verfahren zum Betreiben eines Kraftfahrzeugs (10), welches wenigstens zwei Motoren (20, 50) umfasst, von welchen zumindest ein erster Motor (20) als Verbrennungskraftmaschine und zumindest ein zum Antreiben des Kraftfahrzeugs (10) ausgebildeter zweiter Motor (50) als Elektromotor ausgestaltet ist, bei welchem zumindest eine Steuereinrichtung (60) zum Ansteuern der wenigstens zwei Motoren (20, 50) herangezogen wird,
wobei der zumindest eine erste Motor (20) wenigstens einen Brennraum (22), wenigstens eine Zündquelle (24) und zumindest eine, einen mit dem wenigstens einen Brennraum (22) fluidisch gekoppelten Vorkammerinnenraum (32) aufweisende Vorkammer (30) umfasst, in welche die wenigstens eine Zündquelle (24) zumindest bereichsweise eingeführt ist, wobei der zumindest eine erste Motor (20) durch Entflammung eines Kraftstoff-Luft-Gemisches (34) in dem Vorkammerinnenraum (32) mittels der zumindest einen Zündquelle (24) in einem stabilen befeuerten Zustand (Z1) und in einem instabilen befeuerten Zustand (Z2) betreibbar ist, wobei der zumindest eine erste Motor (20) durch die Steuereinrichtung (60) in Abhängigkeit von einer Lastanforderung aktiviert und nur dann durch Entflammung des Kraftstoff-Luft-Gemisches (34) in dem Vorkammerinnenraum (32) mittels der zumindest einen Zündquelle (24) betrieben wird, wenn dadurch der erste Motor (20) zur Erfüllung der Lastanforderung ausschließlich in dem stabilen befeuerten Zustand (Z1) betrieben wird, **dadurch gekennzeichnet, dass**
der erste Motor (20) gezielt unbefeuert anhand des zweiten Motors (50) aus dem Stillstand beschleunigt und geschleppt betrieben wird, bis der stabile befeuerte Zustand (Z1) durch die Vorkammerzündung in einem Lastbereich (80) oberhalb eines Niedriglastbereichs (70) möglich ist, wobei die Entflammung des Kraftstoff-Luft-Gemisches (34) direkt in diesem Lastbereich (80) erfolgt.

2. Verfahren nach Anspruch 1,
**dadurch gekennzeichnet, dass**
ein zum Bereitstellen von elektrischer Energie für den zweiten Motor (50) ausgebildeter elektrischer Energiespeicher (52), insbesondere eine Hochvoltbatterie, des Kraftfahrzeugs (10) zumindest dann mit beim Betrieb des ersten Motors (20) zumindest im stabilen befeuerten Zustand (Z1) erzeugter Energie versorgt wird, wenn ein vorbestimmter Ladezustand des elektrischen Energiespeichers (52) unterschritten wird.

3. Verfahren nach Anspruch 1 oder 2,
**dadurch gekennzeichnet, dass**
der zumindest eine erste Motor (20) zumindest dann durch Entflammung von Kraftstoff mittels einer unmittelbar in den Brennraum (22) ragenden, zweiten Zündquelle (40) des ersten Motors (20) betrieben und das Kraftfahrzeug (10) mittels des ersten Motors (20) angetrieben wird, wenn das Antreiben des Kraftfahrzeugs (10) durch den zweiten Motor (50) ausgeschlossen ist und die Lastanforderung den Betrieb des zumindest einen ersten Motors (20) durch Entflammung des Kraftstoff-Luft-Gemisches (34) in dem Vorkammerinnenraum (32) mittels der zumindest einen Zündquelle (24) im instabilen befeuerten Zustand (Z2) erwarten lässt.

4. Verfahren nach einem der vorhergehenden Ansprüche,
**dadurch gekennzeichnet, dass**
die Vorkammer (30) zumindest in einem Volllastbetrieb des zumindest einen ersten Motors (20) als passive Vorkammer betrieben wird.

5. Verfahren nach einem der vorhergehenden Ansprüche,
**dadurch gekennzeichnet, dass**
die Vorkammer (30) zumindest in einem Teillastbetrieb des zumindest einen ersten Motors (20) als aktive Vorkammer betrieben wird.

6. Verfahren nach einem der vorhergehenden Ansprüche,
**dadurch gekennzeichnet, dass**
der instabile befeuerte Zustand (Z2) dem Niedriglastbereich (70) zwischen 0% und maximal 10% einer Maximallast des zumindest einen ersten Motors (20) zugeordnet ist.

7. Kraftfahrzeug (10) mit wenigstens zwei Motoren (20, 50), von welchen zumindest ein erster Motor (20) als Verbrennungskraftmaschine und zumindest ein zum Antreiben des Kraftfahrzeugs (10) ausgebildeter zweiter Motor (50) als Elektromotor ausgestaltet ist, und mit zumindest einer Steuereinrichtung (60), welche zum Ansteuern der wenigstens zwei Motoren (20, 50) eingerichtet ist,
**dadurch gekennzeichnet, dass**
der zumindest eine erste Motor (20) wenigstens einen Brennraum (22), wenigstens eine Zündquelle (24) und zumindest eine, einen mit dem wenigstens einen Brennraum (22) fluidisch gekoppelten Vorkammerinnenraum (32) aufweisende Vorkammer (30) umfasst, in welche die wenigstens eine Zündquelle (24) zumindest bereichsweise eingeführt ist, wobei der zumindest eine erste Motor (20) durch Entflammung eines Kraftstoff-Luft-Gemisches (34) in dem Vorkammerinnenraum (32) mittels der zumindest einen Zündquelle (24) in einem stabilen befeuerten Zustand (Z1) und in einem instabilen befeuerten Zustand (Z2) betreibbar ist, und wobei die Steuereinrichtung (60) dazu eingerichtet ist, den zumindest einen ersten Motor (20) in Abhängigkeit von einer Lastanforderung zu aktivieren und derart anzusteuern, dass der zumindest eine erste Motor (20) nur dann durch Entflammung des Kraftstoff-Luft-Gemisches (34) in dem Vorkammerinnenraum (32) mittels der zumindest einen Zündquelle (24) betrieben wird, wenn der erster Motor (20) zur Erfüllung der Lastanforderung ausschließlich in dem stabilen befeuerten Zustand (Z1) betreibbar ist, und derart anzusteuern, dass der erste Motor (20) gezielt unbefeuert anhand des zweiten Motors (50) aus dem Stillstand beschleunigt und geschleppt betrieben wird, bis der stabile befeuerte Zustand (Z1) durch die Vorkammerzündung in einem Lastbereich (80) oberhalb eines Niedriglastbereichs (70) möglich ist, wobei die Entflammung des Kraftstoff-Luft-Gemisches (34) direkt in diesem Lastbereich (80) erfolgt.

8. Kraftfahrzeug (10) nach Anspruch 7,
**dadurch gekennzeichnet, dass**
das Kraftfahrzeug (10) einen seriellen Hybridantriebsstrang umfasst, welchem die wenigstens zwei Motoren (20, 50) zugeordnet sind.

9. Kraftfahrzeug (10) nach Anspruch 7,
**dadurch gekennzeichnet, dass**
das Kraftfahrzeug (10) einen parallelen Hybridantriebsstrang umfasst, welchem die wenigstens zwei Motoren (20, 50) zugeordnet sind.

10. Kraftfahrzeug (10) nach Anspruch 7,
**dadurch gekennzeichnet, dass**
das Kraftfahrzeug (10) einen leistungsverzweigten Hybridantriebsstrang umfasst, welchem die wenigstens zwei Motoren (20, 50) zugeordnet sind.

## Claims

1. Method for operating a motor vehicle (10) comprising at least two motors (20, 50), of which at least a first motor (20) is configured as an internal combustion engine and at least a second motor (50), designed for driving the motor vehicle (10), is configured as an electric motor, in which at least one control device (60) is used for controlling the at least two motors (20, 50),
wherein
the at least one first motor (20) comprises at least one combustion chamber (22), at least one ignition source (24), and at least one prechamber (30) having a prechamber interior (32) fluidically coupled to the at least one combustion chamber (22), into which the at least one ignition source (24) is introduced at least in regions, wherein the at least one first motor (20) is operable, by ignition of a fuel-air mixture (34) in the prechamber interior (32) by means of the at least one ignition source (24), in a stable fired state (Z1) and in an unstable fired state (Z2), wherein the at least one first motor (20) is activated by the control device (60) as a function of a load request and is only operated by ignition of the fuel-air mixture (34) in the prechamber interior (32) by means of the at least one ignition source (24) if, as a result, the first motor (20) is operated exclusively in the stable fired state (Z1) in order to satisfy the load request, **characterized in that**
the first motor (20) is accelerated from standstill in a targeted, unfired manner by means of the second motor (50) and is operated in a towed manner, until the stable fired state (Z1) is possible by means of the prechamber ignition in a load range (80) above a low-load range (70), wherein the ignition of the fuel-air mixture (34) takes place directly in this load range (80).

2. Method according to claim 1,
**characterized in that**
an electrical energy storage device (52), in particular a high-voltage battery, of the motor vehicle (10), designed for providing electrical energy for the second motor (50), is supplied with energy generated during operation of the first motor (20), at least in the stable fired state (Z1), at least when the state of charge of the electrical energy storage device (52) falls below a predetermined value.

3. Method according to claim 1 or 2,
**characterized in that**
the at least one first motor (20) is at least then operated by ignition of fuel by means of a second ignition source (40) of the first motor (20) projecting directly into the combustion chamber (22), and the motor vehicle (10) is driven by means of the first motor (20), when driving of the motor vehicle (10) by the second motor (50) is precluded and the load request gives rise to the expectation of operation of the at least one first motor (20) by ignition of the fuel-air mixture (34) in the prechamber interior (32) by means of the at least one ignition source (24) in the unstable fired state (Z2).

4. Method according to any one of the preceding claims,
**characterized in that**
the prechamber (30) is operated as a passive prechamber at least in a full-load operation of the at least one first motor (20).

5. Method according to any one of the preceding claims,
**characterized in that**
the prechamber (30) is operated as an active prechamber at least in a partial-load operation of the at least one first motor (20).

6. Method according to any one of the preceding claims,
**characterized in that**
the unstable fired state (Z2) is assigned to the low-load range (70) between 0% and a maximum of 10% of a maximum load of the at least one first motor (20).

7. Motor vehicle (10) having at least two motors (20, 50), of which at least a first motor (20) is configured as an internal combustion engine and at least a second motor (50), designed for driving the motor vehicle (10), is configured as an electric motor, and having at least one control device (60) which is configured to control the at least two motors (20, 50),
**characterized in that**
the at least one first motor (20) comprises at least one combustion chamber (22), at least one ignition source (24), and at least one prechamber (30) having a prechamber interior (32) fluidically coupled to the at least one combustion chamber (22), into which the at least one ignition source (24) is introduced at least in regions, wherein the at least one first motor (20) is operable, by ignition of a fuel-air mixture (34) in the prechamber interior (32) by means of the at least one ignition source (24), in a stable fired state (Z1) and in an unstable fired state (Z2), and wherein the control device (60) is configured to activate the at least one first motor (20) as a function of a load request and to control it such that the at least one first motor (20) is only operated by ignition of the fuel-air mixture (34) in the prechamber interior (32) by means of the at least one ignition source (24) if the first motor (20) is operable exclusively in the stable fired state (Z1) in order to satisfy the load request, and to control it such that the first motor (20) is accelerated from standstill in a targeted, unfired manner by means of the second motor (50) and operated in a towed manner, until the stable fired state (Z1) is possible by means of the prechamber ignition in a load range (80) above a low-load range (70), wherein the ignition of the fuel-air mixture (34) takes place directly in this load range (80).

8. Motor vehicle (10) according to claim 7,
**characterized in that**
the motor vehicle (10) comprises a series hybrid drivetrain, to which the at least two motors (20, 50) are assigned.

9. Motor vehicle (10) according to claim 7,
**characterized in that**
the motor vehicle (10) comprises a parallel hybrid drivetrain, to which the at least two motors (20, 50) are assigned.

10. Motor vehicle (10) according to claim 7,
**characterized in that**
the motor vehicle (10) comprises a power-split hybrid drivetrain, to which the at least two motors (20, 50) are assigned.

## Revendications

1. Procédé pour faire fonctionner un véhicule automobile (10) comprenant au moins deux moteurs (20, 50), parmi lesquels au moins un premier moteur (20) est configuré en tant que moteur à combustion interne et au moins un second moteur (50), conçu pour entraîner le véhicule automobile (10), est configuré en tant que moteur électrique, procédé dans lequel au moins un dispositif de commande (60) est utilisé pour commander les au moins deux moteurs (20, 50),
dans lequel
le au moins un premier moteur (20) comprend au moins une chambre de combustion (22), au moins une source d'allumage (24) et au moins une préchambre (30) présentant un espace intérieur de préchambre (32) couplé de manière fluidique à la au moins une chambre de combustion (22), dans laquelle la au moins une source d'allumage (24) est introduite au moins par endroits, dans lequel le au moins un premier moteur (20) peut être exploité, par inflammation d'un mélange carburant-air (34) dans l'espace intérieur de préchambre (32) au moyen de la au moins une source d'allumage (24), dans un état enflammé stable (Z1) et dans un état enflammé instable (Z2), dans lequel le au moins un premier moteur (20) est activé par le dispositif de commande (60) en fonction d'une demande de charge et n'est exploité par inflammation du mélange carburant-air (34) dans l'espace intérieur de préchambre (32) au moyen de la au moins une source d'allumage (24) que si, de ce fait, le premier moteur (20) est exploité exclusivement dans l'état enflammé stable (Z1) pour satisfaire la demande de charge, **caractérisé en ce que**
le premier moteur (20) est accéléré de manière ciblée, sans combustion, à partir de l'arrêt au moyen du second moteur (50) et est exploité en mode tracté, jusqu'à ce que l'état enflammé stable (Z1) soit possible au moyen de l'allumage en préchambre dans une plage de charge (80) supérieure à une plage de charge basse (70), l'inflammation du mélange carburant-air (34) se produisant directement dans cette plage de charge (80).

2. Procédé selon la revendication 1,
**caractérisé en ce que**
un accumulateur d'énergie électrique (52) du véhicule automobile (10), conçu pour fournir de l'énergie électrique au second moteur (50), en particulier une batterie haute tension, est alimenté avec de l'énergie produite lors du fonctionnement du premier moteur (20), au moins dans l'état enflammé stable (Z1), au moins lorsque l'état de charge de l'accumulateur d'énergie électrique (52) est inférieur à un état de charge prédéterminé.

3. Procédé selon la revendication 1 ou 2,
**caractérisé en ce que**
le au moins un premier moteur (20) est exploité, au moins alors, par inflammation de carburant au moyen d'une seconde source d'allumage (40) du premier moteur (20) faisant saillie directement dans la chambre de combustion (22), et le véhicule automobile (10) est entraîné au moyen du premier moteur (20), lorsque l'entraînement du véhicule automobile (10) par le second moteur (50) est exclu et que la demande de charge laisse prévoir le fonctionnement du au moins un premier moteur (20) par inflammation du mélange carburant-air (34) dans l'espace intérieur de préchambre (32) au moyen de la au moins une source d'allumage (24) dans l'état enflammé instable (Z2).

4. Procédé selon l'une des revendications précédentes,
**caractérisé en ce que**
la préchambre (30) est exploitée en tant que préchambre passive au moins dans un fonctionnement à pleine charge du au moins un premier moteur (20).

5. Procédé selon l'une des revendications précédentes,
**caractérisé en ce que**
la préchambre (30) est exploitée en tant que préchambre active au moins dans un fonctionnement à charge partielle du au moins un premier moteur (20).

6. Procédé selon l'une des revendications précédentes,
**caractérisé en ce que**
l'état enflammé instable (Z2) est associé à la plage de charge basse (70) comprise entre 0 % et au maximum 10 % d'une charge maximale du au moins un premier moteur (20).

7. Véhicule automobile (10) comprenant au moins deux moteurs (20, 50), parmi lesquels au moins un premier moteur (20) est configuré en tant que moteur à combustion interne et au moins un second moteur (50), conçu pour entraîner le véhicule automobile (10), est configuré en tant que moteur électrique, et comprenant au moins un dispositif de commande (60) configuré pour commander les au moins deux moteurs (20, 50),
**caractérisé en ce que**
le au moins un premier moteur (20) comprend au moins une chambre de combustion (22), au moins une source d'allumage (24) et au moins une préchambre (30) présentant un espace intérieur de préchambre (32) couplé de manière fluidique à la au moins une chambre de combustion (22), dans laquelle la au moins une source d'allumage (24) est introduite au moins par endroits, dans lequel le au moins un premier moteur (20) peut être exploité, par inflammation d'un mélange carburant-air (34) dans l'espace intérieur de préchambre (32) au moyen de la au moins une source d'allumage (24), dans un état enflammé stable (Z1) et dans un état enflammé instable (Z2), et dans lequel le dispositif de commande (60) est configuré pour activer le au moins un premier moteur (20) en fonction d'une demande de charge et pour le commander de telle sorte que le au moins un premier moteur (20) n'est exploité par inflammation du mélange carburant-air (34) dans l'espace intérieur de préchambre (32) au moyen de la au moins une source d'allumage (24) que si le premier moteur (20) peut être exploité exclusivement dans l'état enflammé stable (Z1) pour satisfaire la demande de charge, et pour le commander de telle sorte que le premier moteur (20) est accéléré de manière ciblée, sans combustion, à partir de l'arrêt au moyen du second moteur (50) et est exploité en mode tracté, jusqu'à ce que l'état enflammé stable (Z1) soit possible au moyen de l'allumage en préchambre dans une plage de charge (80) supérieure à une plage de charge basse (70), l'inflammation du mélange carburant-air (34) se produisant directement dans cette plage de charge (80).

8. Véhicule automobile (10) selon la revendication 7,
**caractérisé en ce que**
le véhicule automobile (10) comprend une chaîne de traction hybride série, à laquelle sont associés les au moins deux moteurs (20, 50).

9. Véhicule automobile (10) selon la revendication 7,
**caractérisé en ce que**
le véhicule automobile (10) comprend une chaîne de traction hybride parallèle, à laquelle sont associés les au moins deux moteurs (20, 50).

10. Véhicule automobile (10) selon la revendication 7,
**caractérisé en ce que**
le véhicule automobile (10) comprend une chaîne de traction hybride à répartition de puissance, à laquelle sont associés les au moins deux moteurs (20, 50).
